(19) Europäisches Patentamt
European Patent Office
Office européen des brevets

(11) Veröffentlichungsnummer: **0 230 004 B1**

(12) **EUROPÄISCHE PATENTSCHRIFT**

(45) Veröffentlichungstag der Patentschrift: **24.04.91**

(51) Int. Cl.5: **A01D 7/10, A01G 1/12**

(21) Anmeldenummer: **86117519.8**

(22) Anmeldetag: **16.12.86**

(54) Garten- und/oder Hofreinigungsgerät.

(30) Priorität: **21.12.85 DE 8536153 U**

(43) Veröffentlichungstag der Anmeldung:
**29.07.87 Patentblatt 87/31**

(45) Bekanntmachung des Hinweises auf die
Patenterteilung:
**24.04.91 Patentblatt 91/17**

(84) Benannte Vertragsstaaten:
**AT BE CH DE ES FR GB IT LI NL SE**

(56) Entgegenhaltungen:
**BE-A- 750 103        GB-A- 498 694
GB-A- 683 984        US-A- 1 414 087
US-A- 3 084 498        US-A- 3 221 485**

(73) Patentinhaber: **Bielefelder Küchenmaschinen-
und Transportgerätefabrik vom Braucke
GmbH
Telgenbrink 105
W-4800 Bielefeld 15(DE)**

(72) Erfinder: **Vom Braucke, Hans
Karlstrasse 23
W-4973 Vlotho(DE)**
Erfinder: **Vom Braucke, Manfred, Dipl.-Ing.
Telgenbrink 103
W-4800 Bielefeld 15(DE)**
Erfinder: **Westerwelle, Dieter
Markusstrasse 9
W-4800 Bielefeld(DE)**

(74) Vertreter: **Hoefer, Theodor, Dipl.-Ing.
Kreuzstrasse 32
W-4800 Bielefeld 1(DE)**

EP 0 230 004 B1

## Beschreibung

Die Erfindung bezieht sich auf ein Garten- und/oder Hofreinigungsgerät, das als Mehrzweckgerät von Hand betätigt wird.

Derartige Handgeräte sind als Einfachlaubharken (Fächerbesen, Drahtbesen), als Laubsammelharken (Doppelfächerbesen) oder als Laub- oder Schneeschieber bekannt.

Bei derartigen Handgeräten sind die flächenhaften Werkzeuge wie Flachbesen, Schieberplatte an einem Stiel fest oder lösbar befestigt.

Eine einfache Laubharke wie ein sogenannter Fächer-oder Drahtbesen kann nur für den speziellen Zweck des Laubkehrens verwendet werden. Eine Laubsammelharke (Greifharke), die aus einem am Stiel befestigten Fächer und einem gelenkig daran angeordneten zusätzlichen Fächer gebildet ist, gestattet es, sowohl das Laub zusammenzuharken als es auch zangenartig zusammenzudrücken, um es besser abtransportieren zu können.

Schneeschieber mit einer gewölbten Schieberplatte aus Metall oder Sperrholz eignen sich zum Zusammenschieben von Schnee auf ebenen Bodenflächen.

Diese Geräte können somit zum Harken oder Schieben verwendet werden.

Soll auch die Oberfläche noch mit einem Besen oder mit einem zusätzlichen Schneeschieber bearbeitet werden, so sind hierzu gesonderte Handgeräte notwendig, die ständig zur Hand sein müssen und daher viel Raum zum Abstellen erfordern.

Soweit es bereits bekannt ist, ein zangenartiges Laubaufnahmegerät mit einem Besen zu kombinieren, so ist dieses Gerät konstruktiv aufwendig und der Besen in seiner Lage unveränderbar an dem Aufnahmegerät befestigt. Dieses Gerät ist nur schwerzu handhaben und kann wechselnden Bedingungen nicht angepaßt werden.

So zeigt USA- 3084498 eine Harke, mit der ein Besen starr kombiniert ist.

Bei einer anderen Harke als Mehrzweckgerät gemäß US-A 3221485 sind parallel zum Stiel daran verschiebbare zusätzliche Gabelzinken befestigt.

Weiterhin offenbart US-A-1414087 ein Gartenreinigungsgerät als Mehrzweckgerät mit einer am Stiel befestigten Harke, an der eine Vorsatzleiste verschiebbar gelagert ist, die ein Vorsatzwerkzeug trägt, das an Federleisten der Harke verschiebbar gehalten ist.

Derartig bekannte Harken bieten wenig Variationsmöglichkeiten bei der Reinigungsarbeit.

Aufgabe der Erfindung ist es, ein Mehrzweckgerät als Gartenund/oder Hofgerät zu schaffen, mit dem nicht nur Lauf befegt oder zusammengeschoben, gehäufelt, zangenartig zusammengedrückt und fortgetragen werden kann, sondern bei einfacher Konstruktion auch wie mit einem schmalen Besen die Oberfläche abgefegt oder von Schnee, Eis o. dgl. gereinigt werden kann.

Gemäß der Erfindung wird diese Aufgabe bei einem Garten- und/ oder Hofreinigungsgerät als Mehrzweckgerät mit an einem Stiel befestigten Werkzeug dadurch gelöst, daß das Vorsatzwerkzeug als Besen ausgebildet ist und daß die das Vorsatzwerkzeug tragende Vorsatzleiste parallel zum Stiel verschiebbar ist.

Dabei ist es auch bevorzugt, das Vorsatzwerkzeug als Eisschabe-leiste oder das Grundwerkzeug als eine Schneeschieberplatte auszubilden.

Bei einer bevorzugten Ausführungsform ist das Grundwerkzeug mit Längsschlitzen ausgestattet, in die Verstellschrauben des Vorsatzwerkzeuges verschiebbar gelagert sind.

Weiterhin kann bevorzugt an dem Grundwerkzeug eine Vorsatzleiste lösbar befestigt sein, die mit federnden und/oder starren Zinken ausgestattet ist, bevorzugt gebogen ausgebildet sein können.

Bei einer weiteren bevorzugten Ausführungsform kann an der Vorsatzleiste eine die Zusatzwerkzeuge haltende Trageleiste befestigt sein.

Bei einem bevorzugten greiferartigen Reinigungsgerät kann an einer am Stiel befestigten Querleiste zusätzlich eine Querplatte mit Federleisten angelenkt sein, die mittelseiner Verstellstange zangenartig gegenüber der Querleiste bewegbar gelagert ist. Durch die verschiebbare (verstellbare) Anordnung eines oder mehrerer Vorsatzwerkzeuge, die in einfacher Weise umgerüstet werden können, zeigt das Reinigungsgerät eine Vielfachverwendung, die verschiedene Einzelwerkzeuge ersetzt.

Das Gerät besteht aus wenigen Einzelteilen und ist kostengünstig herzustellen. Es benötigt wenig Abstellraum.

Auf der Zeichnung sind Ausführungsbeispiele der Erfindung dargestellt. Es zeigen:

Fig.1 eine perspektivische Ansicht einer Einfachlaubharke mit Besenleiste als Vorsatzwerkzeug;

Fig.2 einen Querschnitt durch dieselbe Einfachlaubharke;

Fig.3 einen Querschnitt durch eine Laubsammelharke mit Vorsatzbesen;

Fig.4 eine perspektivische Ansicht eines Schneeschiebers mit einer Vorsatzeisschabeleiste;

Fig.5 eine Draufsicht auf eine abgeänderte Ausführung mit teilweisem Querschnitt.

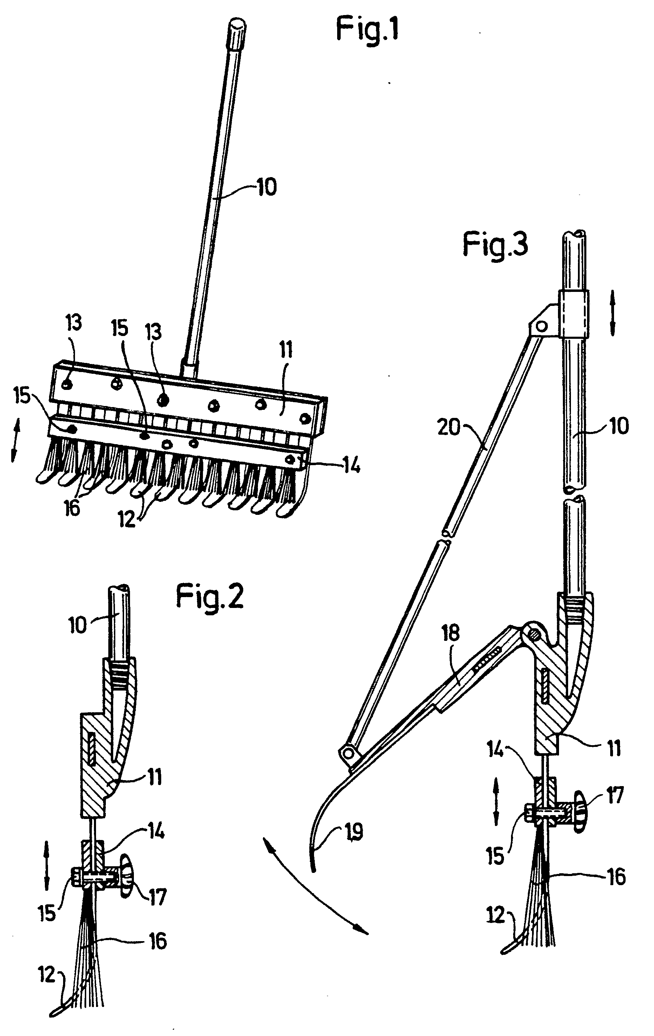

An einem Stiel 10 ist gemäß Fig.1 und 2 eine Querplatte 11 beispielsweise aus Kunststoff befestigt, in der die einzelnen schmalen flachen Federleisten 12 aus Metall oder Kunststoff unter Bildung einer Laubharke eingesetzt sind. Diese Querplatte 11 kann einteilig oder zweiteilig mittels Schrauben 13 zusammengeschraubt sein.

Im mittleren Bereich dieser endseitig abgebogenen Federleisten 12 ist eine zweiteilige Vorsatzleiste 14 ebenfalls mittels Schrauben 15 angesetzt, in die einzelne Besenbüschel 16 eingearbeitet sind.

Die Federleisten 12 bilden für diese Vorsatzleiste 14 mit Besenbüscheln 16 Gleitschienen, an denen bei gelockerter Handmutter 17 diese Vorsatzleiste 14 hin- und hergeschoben werden kann derart, daß in der unteren Stellung die Besenbüschel 16 über die freien unteren Enden der Federleisten 12 vorstehen, so daß das Handgerät nicht nur als Harke, sondern auch als Besen zum Kehren benutzt werden kann.

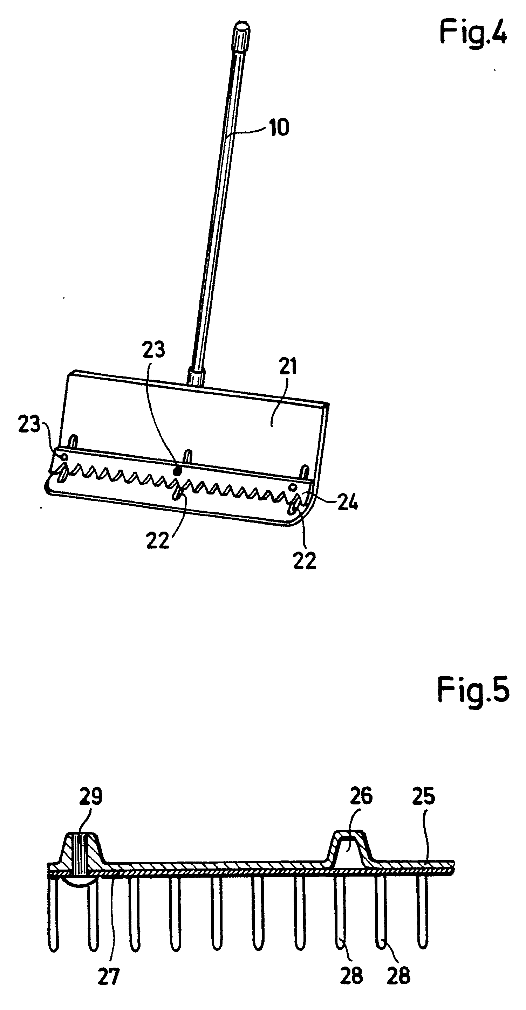

In der oberen Stellung der Vorsatzleiste 14 stehen die Besenbüschel 16 in Außergebrauchsstellung. Diese Vorsatzleiste 14 kann ganz abgenommen werden und beispielsweise durch eine Vorsatzleiste 24 gemäß Fig. 4 als Eisschiebeleiste ersetzt werden, die jeweils auf den Federleisten 12 als Schienen herauf-und herunterbewegt werden können. (stufenlos)

Bei dem in Fig. 3 dargestellten abgeänderten Ausführungsbeispiel ist die Vorsatzleiste 14 an den Federleisten 12 einer Laubsammelharke verschiebbar (lösbar) befestigt , bei der an der Querleiste 11 eine weitere Querplatte 18 angelenkt ist, deren Federleisten 19 mittels einer Verstellstange 20 derart geschwenkt werden können, daß nach dem Zusammenharken das Laub zangenartig zusammengedrückt wird, um es abzutransportieren.

In Fig. 4 ist ein Schneeschieber als Mehrzweckhandgerät dargestellt, an dessen weitgehend starrer Schieberplatte 21 in eingearbeiteten Längsschlitzen 22 die Verstellschrauben 23 einer Vorsatzeisschabeleiste gehalten sind, die aus Metall bestehend mit ihrer Wellenkante Eis besser als die Kante der Schneeschieberplatte 21 abschaben kann.

Als Vorsatzwerkzeuge können auch Zinken als Grubber zum Lockern und Lüften der Oberfläche des Bodens, zum Hacken oder als Rillenzieher verschiebbar an dem Grundwerkzeug lösbar (auswechselbar) befestigt werden.

Bei dem in Fig.5 dargestellten Zusatzgerät zu den in den Fig.1 bis 4 dargestellten und beschriebenen Garten-und/oder Hofreinigungsgeräten, um damit ein Mehrzweckhandgerät zu schaffen, ist mit 25 eine Vorsatzleiste bezeichnet, die Halteösen oder U-förmige Führungsleisten 26 zur stufenlos verstellbaren und lösbaren Befestigung an dem Grundwerkzeug 11-16 aufweist.

An dieser Vorsatzleiste 25 ist eine Trageleiste 27 angenietet (Niet 29), die mit gebogenen federnden oder starren Zinken 28 ausgestattet ist. Diese Zinken 28, insbesondere als federnde schmale Metallstreifen, gestatten es, auch größere (dickere) Schichten von Laub oder sonstigem Abfall zu bewegen. Mit diesen Zinken 28, insbesondere in starrer Ausführung - wie bereits gesagt - als Grubber kann der Boden gelockert, gehackt oder belüftet werden. Auch Rillen können damit in den Boden eingezogen werden.

Auch eine derartige Vorsatzleiste 25 kann in Nuten (Schlitzen 22) des Grundwerkzeuges geführt sein, wobei Halteeinrichtungen wie Keile o.dgl. gesondert in die vorstehenden Halteösen oder Führungsleisten 26 eingesetzt werden können, um die Vorsatzleiste 25 in einfacher Weise wieder abnehmen zu können.

Die in Fig.5 dargestellte Ausführung kann auch an die Stelle der in Fig.1 dargestellten Ausführung treten. Dabei ersetzen die Vorsatzleiste 25 und die Trägerleiste 27 die Querplatte 11. Die federnden oder starren Zinken 28 ersetzen die breiteren Federleisten 12. Vorsatzleiste 25 und die Tragleiste 27 sind unlösbar miteinander vernietet. Die Führungsleiste oder Halteöse 26 nimmt den Stiel 10 auf.

## Ansprüche

1. Garten- und/oder Hofreinigungsgerät als Mehrzweckgerät mit an einem Stiel (10) befestigten Grundwerkzeug wie Harke, Schieber o. dgl. und mit an dem Grundwerkzeug eine verschiebbargelagerte Vorsatzleiste (14), an der ein zusätzliches Vorsatzwerkzeug befestigt ist, dadurch gekennzeichnet, daß das Vorsatzwerkzeug als Besen (16) ausgebildet ist und daß die das Vorsatzwerkzeug tragende Vorsatzleiste (14) parallel zum Stiel (10) verschiebbar ist.

2. Garten- und/oder Hofreinigungsgerät nach Anspruch 1, dadurch gekennzeichnet, daß das Vorsatzwerkzeug als Eisschabeleiste (24) ausgebildet ist.

3. Garten- und/oder Hofreinigungsgerät nach Anspruch 1 oder 2, dadurch gekennzeichnet, daß das Grundwerkzeug als eine Schneeschieberplatte (21) ausgebildet ist.

4. Garten- und/oder Hofreinigungsgerät nach Anspruch 1 bis 3, dadurch gekennzeichnet, daß das Grundwerkzeug mit Längsschlitzen (22) ausgestattet ist, in welchen Verstellschrauben (23) des Vorsatzwerkzeuges (21) verschiebbar gelagert sind.

5. Garten- und/oder Hofreinigungsgerät nach Anspruch 1 bis 4, dadurch gekennzeichnet, daß an dem Grundwerkzeug eine Vorsatzleiste (26) lösbar befestigt ist, die mit federnden und/oder starren Zinken (28) ausgestattet ist.

6. Garten- und/oder Hofreinigungsgerät nach Anspruch 1 bis 5, dadurch gekennzeichnet, daß die Zinken (28) gebogen ausgebildet sind.

7. Garten- und/oder Hofreinigungsgerät nach Anspruch 1 bis 6, dadurch gekennzeichnet, daß an der Vorsatzleiste (26) eine die Zusatzwerkzeuge (28) haltende Trageleiste (27) befestigt (angenietet) ist.

8. Garten- und/oder Hofreinigungsgerät nach einem der Ansprüche 1 bis 7, dadurch gekennzeichnet, daß an einer am Stiel (10) befestigten Querleiste (11) zusätzlich eine Querplatte (18) mit Federleisten (19) angelenkt ist, die mittels einer Verstellstange (20) zangenartig gegenüber der Querleiste (11) bewegbar gelagert ist.

## Claims

1. A garden and/or yard-clearing implement for use as a multi-purpose implement, comprising a basic tool, such as a rake, shovel or the like, mounted on a handle (10) and an attachment bar (l4) displaceably supported on said basic tool and having secured thereto an additional tool accessory, characterized in that said tool accessory is formed as a brush (16) and that said attachment bar (14) carrying said tool accessory is displaceable parallel to said handle (10).

2. A garden and/or yard-clearing implement as in claim 1, characterized in that said tool accessory is formed as an ice scraper bar (24).

3. A garden and/or yard-clearing implement as in claim 1 or 2, characterized in that said basic tool is formed as a snow shovel plate (21).

4. A garden and/or yard-clearing implement as in claims 1 to 3, characterized in that said basic tool is equipped with elongate slots (22) in which adjustment screws (23) of said tool accessory (21) are displaceably supported.

5. A garden and/or yard-clearing implement as in claim 1 to 4, characterized in that said basic tool has detachably secured thereto an attachment bar (26) equipped with resilient and/or rigid prongs (28).

6. A garden and/or yard-clearing implement as in claims 1 to 5, characterized in that said prongs (28) have a bent shape.

7. A garden and/or yard-clearing implement as in claims 1 to 6, characterized in that a support bar (27) for holding said additional tools (28) is secured (riveted) to said attachment bar (26).

8. A garden and/or yard-clearing implement as in any of claims 1 to 7, characterized in that an additional transverse plate 18 comprising resilient strips (19) is hinged to a transverse bar (11) mounted on said handle (10) and is movably mounted relative to said transverse bar (11) by means of an adjustment rod (20) in clamp-like fashion.

## Revendications

1. Appareil de nettoyage pour le jardin et/ou pour la cour qui est réalisé sous la forme d'un appareil à usages multiples, qui comprend un outil de base fixé à un manche (10) comme un râteau, une pelle ou similaire, et qui comprend sur l'outil de base une barre d'adaptation (14) qui est montée de manière à pouvoir être déplacée et à laquelle est fixé un outil d'adaptation supplémentaire, caractérisé par le fait que l'outil d'adaptation est réalisé sous la forme d'un balai (16), et par le fait que la barre d'adaptation (14) qui porte l'outil d'adaptation peut être déplacée parallèlement au manche (10).

2. Appareil de nettoyage pour le jardin et/ou pour la cour selon la revendication 1, caractérisé par le fait que l'outil d'adaptation est réalisé sous la Forme d'une barre de raclage de la glace (24).

3. Appareil de nettoyage pour le jardin et/ou pour la cour selon la revendication 1 ou 2, caractérisé par le fait que l'outil de base est réalisé sous la forme d'une pelle à neige (21).

4. Appareil de nettoyage pour le jardin et/ou pour la cour selon la revendication 1 à 3, caractérisé par le fait que l'outil de base est équipé de fentes longitudinales (22) dans lesquelles sont montées de manière déplaçable des vis de réglage (23) de l'outil d'adaptation (21).

5. Appareil de nettoyage pour le jardin et/ou pour la cour selon la revendication 1 à 4, caractérisé par le fait qu'est fixée de manière amovible sur l'outil de base une barre d'adaptation (26) qui est équipée de dents élastiques et/ou rigides (28).

6. Appareil de nettoyage pour le jardin et/ou pour la cour selon la revendication 1 à 5, caractérisé par le fait que les dents (28) sont recourbées.

7. Appareil de nettoyage pour le jardin et/ou pour la cour selon la revendication 1 à 6, caractérisé par le fait qu'est fixée (rivetée) sur la barre d'adaptation (26) une barre porteuse (27) qui maintient les outils supplémentaires (28).

8. Appareil de nettoyage pour le jardin et/ou pour la cour selon 1'une des revendications 1 à 7, caractérisé par le fait qu'est articulée sur une barre transversale (11) fixée au manche (10) une plaque transversale supplémentaire (18) qui est munie de languettes élastiques (18) et qui, au moyen d'une tige de déplacement (20), est montée mobile à la manière d'une mâchoire par rapport à la barre transversale (11).

Fig.1

Fig.3

Fig.2

Fig.4

Fig.5